# EUROPÄISCHE PATENTSCHRIFT

(11) **EP 1 242 266 B1**
(45) Veröffentlichungstag und Bekanntmachung des Hinweises auf die Patenterteilung: **11.01.2006**
(21) Anmeldenummer: 01982128.9
(22) Anmeldetag: 19.09.2001
(51) Int. Cl.: B60R 21/01

(54) **VERFAHREN ZUR AUSLÖSUNG VON WENIGSTENS EINEM RÜCKHALTEMITTEL**
METHOD FOR TRIPPING AT LEAST ONE RESTRAINING MEANS
PROCEDE POUR DECLENCHER AU MOINS UN ELEMENT DE RETENUE

(30) Priorität: 13.10.2000 DE 10050956
(43) Veröffentlichungstag der Anmeldung: 25.09.2002
(73) Patentinhaber: ROBERT BOSCH GMBH, 70442 Stuttgart (DE)
(72) Erfinder: BENTELE-CALVÖR, Stephan, 71229 Leonberg-Warmbronn (DE); GROTENDIEK, Torsten, 74321 Bietigheim-Bissingen (DE); MINDNER, Klaus, 73728 Esslingen (DE); THIEL, Frank, 71706 Markgroeningen (DE); AUST, Sabine, 70192 Stuttgart (DE); LINK, Andrea, 81549 München (DE)
(86) Internationale Anmeldenummer: PCT/DE2001/003599
(87) Internationale Veröffentlichungsnummer: WO 2002/030715

(56) Entgegenhaltungen:
- DE-A- 3 816 588
- DE-A- 4 223 562
- DE-A- 19 807 124
- US-A- 5 173 614

## Beschreibung

### Stand der Technik

Die Erfindung geht aus von einem Verfahren zur Auslösung von wenigstens einem Rückhaltemittel nach der Gattung des unabhängigen Patentanspruchs.

Bei einzem derartigen Verfahren ist bereits bekannt (z.B. DE 198 07 129 A1), periphere Beschleunigungssensoren in einem Fahrzeug einzusetzen, um in der Nähe einer Aufprallstelle bei einem Unfall Beschleunigungen zu vermessen. Damit wird dann entschieden, ob Rückhaltemittel ausgelöst werden sollen. Liegt ein Auslösesignal von solchen peripheren Beschleunigungssensoren (Satelliten) vor, dann wird dieses Auslösesignal von einer zentralen Steuereinheit überprüft, ob es freigegeben werden kann. Es findet demnach eine Plausibilitätsprüfung statt. Dazu weist die zentrale Steuereinheit selbst Beschleunigungssensoren auf, um dies festzustellen. Dies ist vor allem für eine Seitenaufprallerkennung relevant.

Aus DE 38 16 587 A1 ist eine Einrichtung zur Auslösung einer passiven Sicherheitseinrichtung bekannt, wobei Ereignisse wie ein Hammerschlag, die zu Beschleunigungsspitzen führen, erkannt werden und zu einer Unterdrückung einer möglichen Auslöseentscheidung führen.

### Vorteile der Erfindung

Das erfindungsgemäße Verfahren zur Auslösung von wenigstens einem Rückhaltemittel mit den Merkmalen des unabhängigen Patentanspruchs hat demgegenüber den Vorteil, dass eine eventuell auftretende ungewollte Auslösung bei Fahrmanövern wie Schlaglochdurchfahrten oder Bordsteinkantenüberfahrten besser unterdrückt wird. Solche Fahrmanöver sollen also nicht zu einer Auslösung der Rückhaltemittel führen. Die Beschleunigungssensoren in der zentralen Steuereinheit sind dabei so angeordnet, dass sie die Beschleunigung mindestens so schnell wie die peripheren Beschleunigungssensoren aufnehmen. Wird ein Verhalten, wie es bei einem Schlagloch oder bei einer Bordsteinüberfahrt vorkommt, erkannt, wird eine Freigabeschwelle für eine erste vorgegebene Zeit angehoben oder die Freigabe wird für eine zweite vorgegebene Zeit gesperrt, um so ungewollte Auslösesignale für Rückhaltemittel zu unterdrücken. Es wird hier sowohl die Beschleunigungswerte als auch integrierte beziehungsweise aufsummierte Beschleunigungen für den Plausibilitätstest untersucht.

Durch die in den abhängigen Ansprüchen aufgeführten Maßnahmen und Weiterbildungen sind vorteilhafte Verbesserungen des in dem unabhängigen Patentanspruch angegebenen Verfahrens zur Auslösung von wenigstens einem Rückhaltemittel möglich.

Besonders vorteilhaft ist, dass ein Rettungsband vorhanden ist, um auch bei angehobener Freigabeschwelle oder gesperrter Freigabe die Rückhaltemittel im Falle eines Unfalls freizugeben. Dazu werden die aufsummierten Querbeschleunigungen mit dem Rettungsband verglichen. Dies ist vor allem bei einem Seitenaufprall von Interesse.

Vorteilhaft ist, dass das erfindungsgemäße Verfahren erst zu arbeiten beginnt, wenn ein Rauschband für die Beschleunigungen überschritten wird. Damit werden kleine Beschleunigungen, die aufgrund von Unebenheiten einer Fahrbahn vorkommen, unterdrückt.

Desweiteren ist es von Vorteil, dass für die Aufsummierung der Beschleunigungen ein Integrator verwendet wird, der entweder softwaremäßig oder hardwaremäßig realisiert wird.

Integrationssignale sind durch die Aufsummierung von Beschleunigungswerten harmonischer. Es findet eine Filterung im Vergleich zu dem Beschleunigungssignal statt. Damit lassen sich dann Aussagen über den Gesamtverlauf eines Crash machen, während Beschleunigungen nur eine Momentaufnahme wiedergeben.

Weiterhin ist es von Vorteil, dass die Auslöseschwellen bei den peripheren Beschleunigungssensoren in Abhängigkeit von der Veränderung der Beschleunigungen angepasst werden. Ändert sich die Beschleunigung dabei in Abhängigkeit von der Zeit sehr stark, dann werden die Auslöseschwellen stark abgesenkt, um so bei Kollisionsvorgang eine Auslösung von Rückhaltemitteln zu bewirken. Dabei wird die Veränderung der Beschleunigung in Abhängigkeit von der Zeit vorzugsweise quantisiert, um so einem Intervall von Beschleunigungsänderungen eine Änderung der Auslöseschwelle zuzuordnen.

Schließlich ist es auch von Vorteil, dass eine Vorrichtung zur Durchführung der erfindungsgemäßen Verfahren vorliegt, die periphere Beschleunigungssensoren und zentral angeordnete Sensoren aufweist, wobei die zentral angeordneten Sensoren mit einem Steuergerät zur Auslösung des wenigstens einen Rückhaltemittels verbunden sind. Die peripheren Beschleunigungssensoren sind mit den zentral angeordneten Beschleunigungssensoren bzw. der Steuereinheit verbindbar. Die zentral angeordneten Beschleunigungssensoren sind dabei in verschiedenen Sensierungsrichtungen vorhanden. D.h. es liegen Sensoren in X- und Y-Richtung vor, wobei die X-Sensoren in Fahrtrichtung die Beschleunigung sensieren und die Y-Sensoren in der Seitenrichtung, so dass damit ein Seitenaufprall detektierbar wird. Alternativ ist es dabei möglich, dass die zentral angeordneten Sensoren jeweils +/-45° zur Fahrtrichtungsachse zueinander versetzt eingebaut werden.

### Zeichnung

Ausführungsbeispiele der Erfindung sind in der Zeichnung dargestellt und werden in der nachfolgenden Beschreibung näher erläutert. Es zeigt Figur 1 eine Anordnung von Beschleunigungssensoren im Fahrzeug, Figur 2 zentral angeordnete Beschleunigungssensoren im Fahrzeug, die in unterschiedlichen Sensierungsrichtungen angeordnet sind, Figur 3 ein Diagramm zur Darstellung des erfindungsgemäßen Verfahrens, Figur 4 ein zweites Diagramm zur Darstellung des erfindungsgemäßen Verfahrens, Figur 5 ein drittes Diagramm zur Darstellung des erfindungsgemäßen Verfahrens, Figur 6 ein Diagramm zur Illustration der Veränderung der Auslöseschwelle in Abhängigkeit von Beschleunigungsänderungen und Figur 7 ein Flußdiagramm des erfindungsgemäßen Verfahrens.

### Beschreibung

Rückhaltemittel wie Airbags und Gurtstraffer werden zunehmend und in erhöhter Anzahl in Kraftfahrzeugen eingesetzt. Die ungewollte Auslösung von Airbags ist dabei eine wichtige Aufgabe, um Verletzungen von Fahrzeuginsassen zu vermeiden. Bei Fahrmanövern wie einer Bordsteinkantenüberfahrt oder einer Schlaglochdurchfahrt liegen sogenannte Misuses vor, bei denen keine Auslösung eines Rückhaltemittels notwendig ist. Die Auslösung sollte daher, wenn sie denn überhaupt von einem Satelliten angefordert wird, in einem solchen Fall unterdrückt werden.

Erfindungsgemäß wird daher ein Verfahren zur Auslösung von wenigstens einem Rückhaltemittel verwendet, das durch zentral angeordnete Beschleunigungssensoren solche Misuses erkennt und dann ein Auslösesignal von peripheren Beschleunigungssensoren für eine vorgegebene Zeit unterdrückt, sofern die Signale von den zentral angeordneten Beschleunigungssensoren nicht ein vorgegebenes Rettungsband oder vorhandene Freigabeschwellen überschreiten. Dafür werden sowohl Beschleunigungen in Seitenrichtungen des Fahrzeugs und aufsummierte Beschleunigungen in Fahrt- und Seitenrichtung des Fahrzeugs untersucht.

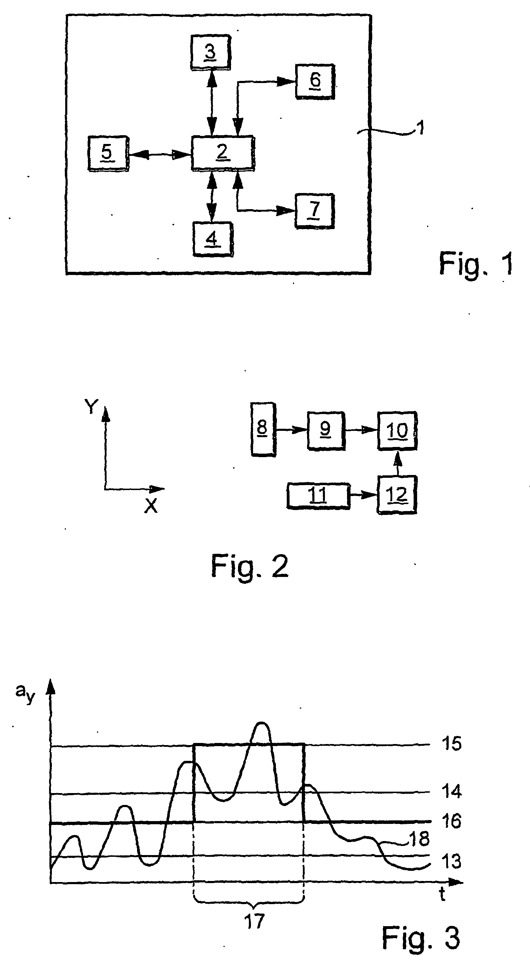

In Figur 1 ist eine Anordnung von Beschleunigungssensoren in einem Fahrzeug dargestellt. Das Fahrzeug 1 weist eine zentrale Steuereinheit 2 im Fahrzeug auf, die beispielsweise auf dem Fahrzeugtunnel angeordnet ist. Die zentrale Steuereinheit 2 weist, wie in Figur 2 dargestellt, Beschleunigungssensoren 8 und 11 auf, die jeweils in X- und Y-Richtung angeordnet sind, wobei 0°/90°- und +/-45°- Konzepte einsetzbar sind. 0° entspricht der X-Achse und 90° der Y-Achse.

Der Beschleunigungssensor 8 ist mit einer Elektronik 9 verbunden, die eine Verstärkung und eine Digitalisierung des Beschleunigungssignals vornimmt, so dass ein Microcontroller 10 als ein Prozessor, an den ein Datenausgang der Elektronik 9 angeschlossen ist, das Beschleunigungssignal vom Beschleunigungssensor 8 verarbeiten kann. An einen zweiten Dateneingang des Microcontrollers 10 ist eine Elektronik 12 angeschlossen, die die Signale vom Beschleunigungssensor 11 in derselben Weise verarbeitet. Die Verstärkung der Elektronik 9 beziehungsweise 12 kann alternativ auch den Beschleunigungssensoren 8 und 11 zugeordnet sein, so dass sich ein Beschleunigungssensor und ein Meßwertverstärker auf einem Chip befinden. Die Analog-Digital-Wandlung kann dem Mikrocontroller 10 zugeordnet sein, der dann Analogeingänge aufweist, an die die Beschleunigungssensoren angeschlossen werden.

Die zentrale Steuereinheit 2 ist über einen ersten Datenein-/-ausgang mit einem peripheren Beschleunigungssensor 3, über einen zweiten Datenein-/-ausgang mit einem peripheren Beschleunigungssensor 4, über einen dritten Datenein-/-ausgang mit einem peripheren Beschleunigungssensor 5, über einen vierten Datenein-/-ausgang mit einem peripheren Beschleunigungssensor 6 und über einen fünften Datenein-/-ausgang mit einem peripheren Beschleunigungssensor 7 verbunden. Diese Verbindungen können alternativ auch über einen Bus, einen Sensorbus oder einen Zündbus erfolgen.

Die peripheren Beschleunigungssensoren 3, 4, 5, 6 und 7 weisen jeweils ein eigenes Steuergerät auf, so dass allenfalls Auslösesignale zu dem zentralen Mikrocontroller 10 übertragen werden. Alternativ ist es möglich, dass die peripher angeordneten Beschleunigungssensoren 3 bis 7 eine Elektronik aufweisen, die allein eine Verstärkung und eine Digitalisierung der Beschleunigungssignale durchführt und dass die Verarbeitung der Beschleunigungssignale im Mikrocontroller 10 zentral durchgeführt wird. Auch ein Mischverbau mit Komponenten beider Konzepte ist hier möglich. Die peripheren Beschleunigungssensoren 3 bis 7 sind hier zum einen für die Seitenaufprallsensierung und zum anderen für die Frontaufprallsensierung angeordnet. Dabei ist der periphere Beschleunigungssensor 5 für die Frontaufprallsensierung vorgesehen. Es ist möglich, dass weitere Sensoren in verschiedenen Teilen des Fahrzeugs untergebracht werden und mit der zentralen Steuereinheit 2 verbindbar sind. Es ist weiterhin möglich, dass weniger Beschleunigungssensoren als hier dargestellt verwendet werden.

In Figur 3 ist ein Beschleunigung-Zeit-Diagramm dargestellt, das ein Beschleunigungssignal 18 vom Beschleunigungssensor 8, der die Beschleunigung in Y-Richtung mißt, das ist beispielsweise die Seitenrichtung des Fahrzeugs 1, in Abhängigkeit von der Zeit darstellt. Die Ordinate des Diagramms wird daher mit ay und die Abszisse mit t markiert.

Dieses Beschleunigungssignal 18 wird hier mit verschiedenen Schwellen 13, 14, 15 und 16 verglichen. Überschreitet das Beschleunigungssignal 18 zum ersten Mal die Schwelle 13, dann startet das erfindungsgemäße Verfahren und wird weiterhin durchgeführt, auch wenn die Schwelle 13 wieder unterschritten wird. Die Schwelle 13 stellt daher das Rauschband dar. Die hier dargestellten Schwellen 13, 14, 15 und 16 sind symmetrisch um die Abszisse vorhanden, um Beschleunigungen in beiden Richtungen, also +Y und -Y zu erfassen, wobei hier +Y Beschleunigungen von rechts und -Y Beschleunigungen von links bedeuten.

Die Schwelle 16 stellt zunächst die Freigabeschwelle dar. Sendet ein Satellit 3-7 ein Auslösesignal, dann überprüft der Mikrocontroller 10, ob das Beschleunigungssignal 18 über der Schwelle 16 liegt. Ist das der Fall, werden die Rückhaltemittel zur Auslösung freigegeben. Ist das nicht der Fall, dann werden die Rückhaltemittel nicht zur Auslösung freigegeben.

Wird nun die Schwelle 14 durch das Beschleunigungssignal überschritten, aber die Schwelle 15 unterschritten, wird eine solche Beschleunigung erkannt, die auf einen Misuse, also eine Schlaglochdurchfahrt oder eine Bordsteinkantenüberfahrt, hindeutet. Eine Unterdrückung des Auslösesignals ist daher gegebenenfalls notwendig. Die Freigabeschwelle wird daher von dem Schwellwert 16 auf den Schwellwert 15 für eine Zeit 17 angehoben. Der Algorithmus wird damit unempfindlicher.

Die Schwellen 13 und 16 liegen bei mehreren G (Erdbeschleunigung), während die Schwellen 14 und 15 deutlich über 10 G liegen. In Reaktion auf ein Beschleunigungssignal, das zwischen den Schwellen 14 und 15 liegt, wird also die Freigabeschwelle für den zentral angeordneten Y-Sensor 8 für die vorgegebene Zeit 17 auf den Wert 15 angehoben. Damit wird der Auslösealgorithmus, der hier beschrieben wird, unempfindlicher. Wird während der Zeit 17 die Freigabeschwelle auf dem Wert 15 durch das Beschleunigungssignal übertroffen und der Satellit 3-7 sendet nach wie vor eine Auslösesignal, dann werden die Rückhaltemittel zur Auslösung freigegeben.

Die Anhebung der Freigabeschwelle 16 auf den Wert 15 erfolgt für die vorgegebene Zeit 17, die aus experimentellen Daten ermittelt wird. Diese experimentellen Daten sind so ausgelegt, dass beispielsweise eine Bordsteinkantenüberfahrt oder eine Schlaglochdurchfahrt damit zeitlich erfasst werden, so dass das erfindungsgemäße Verfahren möglichst schnell wieder für die Erkennung eines Aufpralls bereit ist, um einen optimalen Schutz für die Fahrzeuginsassen zu bieten. Der Auslösealgorithmus, der hier zugrundeliegt und in der Steuereinheit 2 auf dem Prozessor 10 abläuft, kann in der Weise verfeinert werden, dass die Anhebung der Schwelle 16 nur dann erfolgt, wenn das Beschleunigungssignal 18 ein Maximum in dem Beschleunigungsbereich zwischen den Schwellen 14 und 15 zeigt und nicht dieses Intervall durchwandert, um weiter zu steigen. Wenn das Beschleunigungssignal 18 die Freigabeschwelle 15 überschreitet, dann wird ein Auslösesignal von peripheren Beschleunigungssensoren freigegeben. Dann liegt ein Aufprall bei hohen Geschwindigkeiten vor.

In einer Weiterbildung ist es vorgesehen, dass auch das aufsummierte Beschleunigungssignal des Y-Beschleunigungssensors 8 mit einem festen Rettungsband, das ist ein Schwellwert, der symmetrisch zur Zeitachse vorliegt, verglichen wird. Wenn dieses Rettungsband von dem aufsummierten Beschleunigungssignal überschritten wird, dann liegt ein sogenannter Seitenaufprall vor, und ein Auslösesignal von dem peripheren Beschleunigungssensor 3-7 wird freigegeben. Dies ist insbesondere auch dann der Fall, wenn das Beschleunigungssignal noch unter der Schwelle 14 liegt.

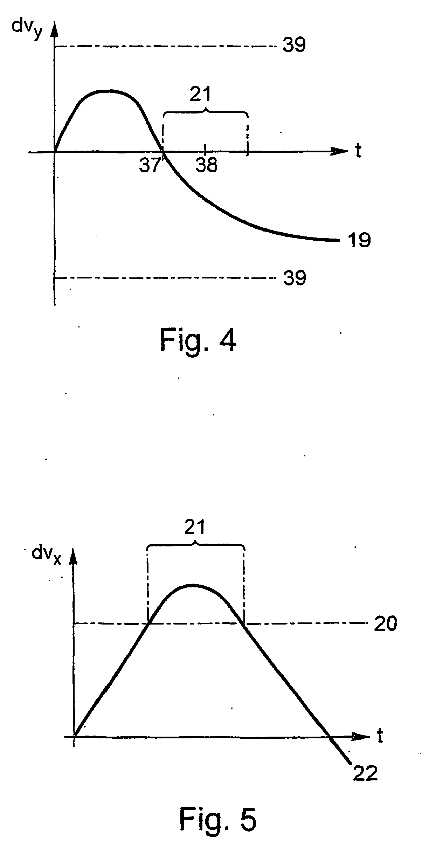

In Figur 4 ist ein aufsummiertes Beschleunigungssignal-Zeitdiagramm dargestellt, bei dem das aufsummierte Beschleunigungssignal 19 dv_{y} in Y-Richtung, also in Fahrzeugquerrichtung, in Abhängigkeit von der Zeit auf einen Nulldurchgang und damit einen Vorzeichenwechsel hin überprüft wird. Der Nulldurchgang wird hier als Überschreiten eines Schwellwerts, nämlich der Zeitachse, betrachtet.

Die Ordinate gibt das aufsummierte Beschleunigungssignal in Y-Richtung an, während die Abszisse die Zeit angibt. Daher ist die Ordinate mit dvy und die Abszisse mit t bezeichnet. Werden Beschleunigungen aufsummiert, dann liegt ein Geschwindigkeitssignal vor, wobei hier insbesondere die Integration der Beschleunigung durchgeführt wird.

Wird der Nulldurchgang des aufsummierten Beschleunigungssignal erkannt, dann wird, sobald die Zündanforderung (Auslösesignal) des Satelliten innerhalb der vorgebbaren Zeit 38 erfolgt, eine Freigabe für das Auslösesignal für eine vorgegebene Zeit 21 gesperrt. Das aufsummierte Beschleunigungssignal 19 des zentralen Beschleunigungssensors 8, hier des Y-Beschleunigungssensors, muß nach einer vorgegebenen Zeit einen Vorzeichenwechsel nach Start des Algorithmus bzw. des erfindungsgemäßen Verfahrens aufweisen, so dass es zu der Sperrung kommen kann. Die Zeit 37, die das Signal 19 benötigt, um einen Nulldurchgang und damit Vorzeichenwechsel zu erfahren, muß also kleiner als die vorgegebene Zeit 38 sein. Damit wird verhindert, dass das aufsummierte Beschleunigungssignal nicht für eine lange Meßzeit im Hinblick auf den Nulldurchgang zur Sperrung beobachtet wird.

Ein Rettungsband 39 ist wiederum symmetrisch angeordnet und das aufsummierte Beschleunigungssignal 19 muß diese Schwelle 39 überschreiten, um ein Freigabesignal für ein Auslösesignal von einem peripheren Beschleunigungssensor zu erzeugen. Dieses Rettungsband 39 ist vorhanden, um trotz des erkannten Misuse die Erkennung eines Seitenaufpralls zuzulassen.

In Figur 5 ist ein weiteres Diagramm dargestellt, das aufsummierte Beschleunigungen dvₓ in Abhängigkeit von der Zeit darstellt. Hier wird das Beschleunigungssignal vom X-Beschleunigungssensor 11 integriert (Signal 22) und mit einem festen Schwellwert 20 verglichen. Sobald dieser Wert 20 erreicht wird, erfolgt für die vorgegebene Zeit 21 die Sperrung. Diese Sperrung kann nur durch das Signal 19 von dem Y-Sensor überstimmt werden, wenn das Rettungsband 39 überschritten wird.

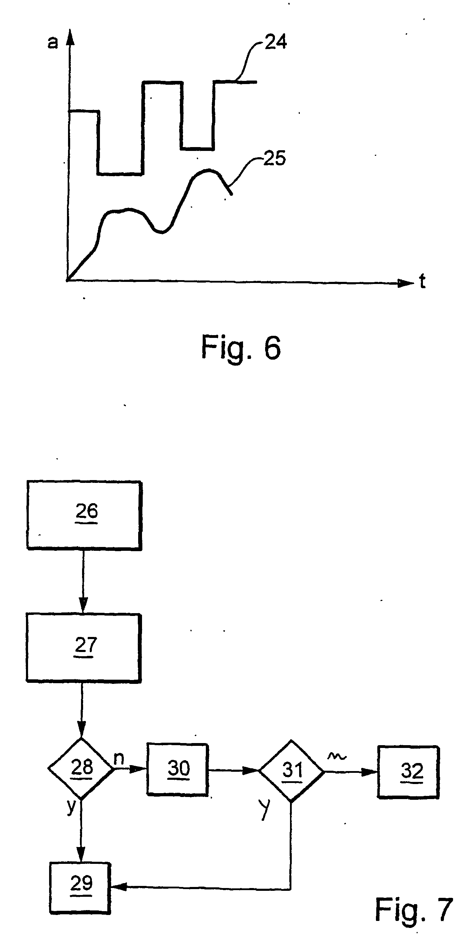

In Figur 6 ist dargestellt, wie die Auslöseschwelle 24 in Abhängigkeit von Änderungen des Beschleunigungssignals 25 eines peripheren Beschleunigungssensors verändert wird. Das Diagramm in Figur 6 zeigt ein Beschleunigung-Zeit-Diagramm, wobei das Beschleunigungssignal 25 seine Steigung ändert. Auf der Ordinate wird die Beschleunigung a abgetragen, während auf der Abszisse die Zeit t zu finden ist. Ändert sich die Steigung stark, dann wird die Schwelle 24 für eine vorgegebene Zeit gesenkt, um dann wieder zu einem Ruhewert zurück zu kehren. Weist nun das Beschleunigungssignal 25 erneut eine starke Änderung auf, dann wird in Abhängigkeit von dieser Änderung die Auslöseschwelle 24 angehoben. Die Anhebung der Schwelle 24 erfolgt also in Abhängigkeit von der Änderung des Beschleunigungssignals 25. Dabei werden die Änderungen der Beschleunigung in Intervalle eingeteilt und diesen Intervallen wird jeweils eine Schwellenänderung zugeordnet. Damit liegt eine Quantisierung vor.

In Figur 7 ist ein Flußdiagramm des erfindungsgemäßen Verfahrens dargestellt. In Verfahrensschritt 26 erkennen die peripheren Beschleunigungssensoren, dass Rückhaltemittel ausgelöst werden sollen, da Beschleunigungssignale 25 eine Auslöseschwelle 24 überschritten haben. Diese Auslösesignale werden an die zentrale Steuereinheit 2 übertragen. In Verfahrensschritt 27 überprüft die zentrale Steuereinheit 2 anhand eigener Beschleunigungssignale, die mittels der zentral angeordneten Beschleunigungssensoren 8 und 11 ermittelt werden, ob diese Auslösesignale freigegeben werden können. In Verfahrensschritt 28 wird dies, wie oben dargestellt, anhand der Freigabeschwelle 16 bzw. 15 oder einer vorhanden Sperrung des Auslösesignals überprüft. Dabei wird auch überprüft, ob das Rettungsband 39 überschritten wird.

Können die Signale freigegeben werden, dann werden in Verfahrensschritt 29 die Rückhaltemittel ausgelöst. Ist das nicht der Fall, dann werden in Verfahrensschritt 30 Freigabeschwellen 16 für eine vorgegebene Zeit angehoben oder es erfolgt eine Sperrung des Auslösesignals. In Verfahrensschritt 31 wird überprüft, ob die angehobene Freigabeschwelle 15 oder das Rettungsband 39 übertroffen wird. Ist das der Fall, dann wird in Verfahrensschritt 29 die Auslösung von entsprechenden Rückhaltemitteln freigegeben, ist dies nicht der Fall, dann endet in Verfahrensschritt 32 das Verfahren.

Das erfindungsgemäße Verfahren beginnt immer dann, sobald die peripheren Beschleunigungssensoren 3-7 einen Seitenaufprall erkennen. Es ist jedoch auch für andere Aufprallarten verwendbar.

## Patentansprüche

1. Verfahren zur Auslösung von wenigstens einem Rückhaltemittel, wobei ein Auslösesignal von einem in einem Fahrzeug angeordneten peripheren Beschleunigungssensor (3 - 7), der zur Front- oder Seitenaufprallsensierung in der Nähe einer Aufprallstelle angeordnet ist, für das wenigstens eine Rückhaltemittel mit Signalen von einem im Fahrzeug (1) zentral angeordneten Beschleunigungssensor (8, 11), der in einer Steuereinheit (2) auf dem Fahrzeugtunnel angeordnet ist, zur Auslösung des wenigstens einen Rückhaltemittels freigegeben wird, **dadurch gekennzeichnet daß** die Freigabe dann erfolgt, wenn die Signale eine Freigabeschwelle (16) überschreiten und dass, wenn die Signale einen ersten Schwellwert (14, 20), der über der Freigabeschwelle (16) aber unter einem zweiten Schwellewert (15) liegt, übertreffen, die Freigabeschwelle (16) für die Signale für eine erste vorgegebene Zeit (17) angehoben wird oder die Freigabe für das Auslösesignal für eine zweite vorgegebene Zeit (21) gesperrt wird.

2. Verfahren nach Anspruch 1, **dadurch gekennzeichnet, dass** als die Signale Beschleunigungen oder aufsummierte Beschleunigungen verwendet werden.

3. Verfahren nach Anspruch 1 oder 2, **dadurch gekennzeichnet, dass**, wenn die aufsummierten Beschleunigungen (19) einen Vorzeichenwechsel durch einen Nulldurchgang durchlaufen oder, wenn die aufsummierten Beschleunigungen (22) den Schwellwert (20) erreichen, die Freigabe für die vorgegebene Zeit (21) gesperrt wird.

4. Verfahren nach einem der vorhergehenden Ansprüche, **dadurch gekennzeichnet, dass**, wenn die aufsummierten Querbeschleunigungen, die von dem zentral angeordneten Beschleunigungssensor (8, 11) gemessen werden, im Fahrzeug ein Rettungsband (39) übertreffen, das Auslösesignal immer freigegeben wird.

5. Verfahren nach Anspruch 1, 2, 3 oder 4, **dadurch gekennzeichnet, dass** eine Auslöseschwelle (24) für den wenigstens einen peripheren Beschleunigungssensor (3 - 7) in Abhängigkeit von der Beschleunigungsänderung eingestellt wird.

6. Verfahren nach einem der vorhergehenden Ansprüche, **dadurch gekennzeichnet, dass** um die Beschleunigung ein Rauschband (13) berücksichtigt wird, wobei nur Beschleunigungen, die beim Verfahrensstart größer als das Rauschband sind, berücksichtigt werden.

7. Verfahren nach einem der vorhergehenden Ansprüche, **dadurch gekennzeichnet, dass** für die Aufsummierung der Beschleunigungen jeweils ein Integrator verwendet wird.

8. Verfahren nach einem der vorhergehenden Ansprüche, **dadurch gekennzeichnet, dass** die Beschleunigungen in verschiedenen Sensierungsrichtungen ermittelt werden.

## Claims

1. Method for tripping at least one restraining means, wherein a tripping signal from a peripheral acceleration sensor (3 - 7), which is arranged in a vehicle and in the vicinity of an impact point for sensing front impacts or side impacts, for the at least one restraining means with signals from an acceleration sensor (8, 11) which is arranged centrally in the vehicle (1), in a control unit (2) on the vehicle tunnel, is enabled in order to trip the at least one restraining means, **characterized in that** the enabling process occurs when the signals exceed an enabling threshold (16), and **in that** when the signals exceed a first threshold value (14, 20) which is above the enabling threshold (16) but below a second threshold value (15), the enabling threshold (16) for the signals is raised for a first predefined time (17) or the enabling process for the tripping signal is blocked for a second predefined time (21).

2. Method according to Claim 1, **characterized in that** accelerations or summed accelerations are used as the signals.

3. Method according to Claim 1 or 2, **characterized in that** if the summed accelerations (19) pass through a sign change due to a zero crossover when the summed accelerations (22) reach the threshold value (20), the enabling process is blocked for the predefined time (21).

4. Method according to one of the preceding claims, **characterized in that** if the summed lateral accelerations which are measured by the centrally arranged acceleration sensor (8, 11) in the vehicle pass beyond a protection band (39), the tripping signal is always enabled.

5. Method according to Claim 1, 2, 3 or 4, **characterized in that** a tripping threshold (24) is set for the at least one peripheral acceleration sensor (3 - 7) as a function of the change in acceleration.

6. Method according to one of the preceding claims, **characterized in that** a noise band (13) around the acceleration is taken into account, with only accelerations which are greater than the noise band at the start of the method being taken into account.

7. Method according to one of the preceding claims, **characterized in that** in each case an integrator is used for summing the accelerations.

8. Method according to one of the preceding claims, **characterized in that** the accelerations are determined in various sensing directions.

## Revendications

1. Procédé pour déclencher au moins un moyen de retenue, selon lequel un signal de déclenchement est libéré par un détecteur d'accélération (3 à 7) périphérique placé dans un véhicule à proximité d'un point de collision afin de détecter une collision frontale ou latérale, pour l'au moins un moyen de retenue à l'aide de signaux provenant d'un détecteur d'accélération (8, 11) disposé centralement dans le véhicule (1) et placé dans une unité de commande (2) sur le tunnel pour véhicules,
**caractérisé en ce que**
la libération a lieu quand les signaux dépassent un seuil de libération (16) et, quand les signaux dépassent une première valeur seuil (14, 20) supérieure au seuil de libération (16) mais inférieure à une deuxième valeur seuil (15), le seuil de libération (16) pour les signaux est relevé pendant une première durée (17) prédéfinie ou la libération du signal de déclenchement est bloquée pendant une deuxième durée (21) prédéfinie.

2. Procédé selon la revendication 1,
**caractérisé en ce que**
les signaux utilisés sont des accélérations ou des accélérations additionnées.

3. Procédé selon la revendication 1 ou 2,
**caractérisé en ce que**
la libération est bloquée pendant la durée (21) prédéinie quand les accélérations additionnées (19) subissent un changement de signe en passant par zéro ou quand les accélérations additionnées (22) atteignent la valeur seuil (20).

4. Procédé selon l'une des revendications précédentes,
**caractérisé en ce que**
le signal de déclenchement est toujours libéré quand les accélérations transversales additionnées mesurées par le détecteur d'accélération (8, 11) disposé centralement dépassent une bande de secours (39) dans le véhicule.

5. Procédé selon la revendication 1, 2, 3 ou 4,
**caractérisé en ce que**
un seuil de déclenchement (24) pour l'au moins un détecteur d'accélération (3 à 7) périphérique est réglé en fonction de la modification de l'accélération.

6. Procédé selon l'une des revendications précédentes,
**caractérisé en ce que**
une bande de bruit (13) est prise en compte pour l'accélération, seules étant prises en compte les accélérations supérieures à la bande de bruit au début du procédé.

7. Procédé selon l'une des revendications précédentes,
**caractérisé en ce que**
pour additionner les accélérations on utilise à chaque fois un intégrateur.

8. Procédé selon l'une des revendications précédentes,
**caractérisé en ce que**
les accélérations sont déterminées dans différentes directions de détection.
